# EUROPÄISCHE PATENTSCHRIFT

(11) **EP 1 662 223 B1**
(45) Veröffentlichungstag und Bekanntmachung des Hinweises auf die Patenterteilung: **14.03.2007**
(21) Anmeldenummer: 04027827.7
(22) Anmeldetag: 24.11.2004
(51) Int. Cl.: F28F 21/06, F28F 21/08, F28F 1/12, F28F 1/42, B29C 65/46

(54) **Wärmeübertrager und Herstellungsverfahren**
Heat exchanger and method of fabrication
Echangeur de chaleur et son procédé de fabrication

(43) Veröffentlichungstag der Anmeldung: 31.05.2006
(73) Patentinhaber: Modine Manufacturing Company, Racine/Wisconsin 54403-2552 (US)
(72) Erfinder: Nies, Jens, Dipl.-Ing., 71088 Holzgerlingen (DE); Opferkuch, Frank, Dipl.-Ing., 72669 Unterensingen (DE)
(74) Vertreter: Wolter, Klaus-Dietrich

(56) Entgegenhaltungen:
- EP-A- 0 339 206
- EP-A- 1 203 923
- WO-A-92/19900
- DE-A1- 3 502 972
- US-A- 4 484 621

## Beschreibung

Die Erfindung betrifft einen Wärmeübertrager, bestehend aus Rohren und dazwischen angeordneten Wärmeübertragungskörpern, die mit den Rohren in Kontakt sind, sowie mit wenigstens einem Sammelkasten, zur Einleitung des einen wärmeübertragenden Mediums in die Rohre bzw. zur Aufnahme des einen wärmeübertragenden Mediums aus den Rohren, wobei das andere wärmeübertragende Medium durch die Wärmeübertragungskörper strömt, um mit dem einen wärmeübertragenden Medium in wärmeübertragender Beziehung zu stehen, und wobei die Rohre aus Kunststoff bestehen und die Wärmeübetragungskörper aus Metall hergestellt sind. Ferner bezieht sich die Erfindung auf ein Herstellungsverfahren für Wärmeübertrager.
Ein Wärmeübertrager, der die beschriebenen Merkmale besitzt, ist aus dem EP -A-1 203 923 bekannt. Die Rohre und die Wärmeübertragungskörper werden dort mittels der Seitenteile elastisch verspannt, um den Wärmeübergang zu verbessern.
Aus der US 4 484 621 gehört es zum Stand der Technik, Kunststoff - Seitenteile eines Wärmetauschers mit metallischen Wärmetauschrippen zu verbinden.
Die Flachrohre und die Wärmeübertragungskörper bestehen gemäß der DE 33 02 150 A1 aus Metall. Die Wärmeübertragungskörper sind als flache Rippen ausgebildet, die der Kontur der Flachrohre entsprechende Öffnungen haben. Durch jede Öffnung eines Stapels aus Rippen wird je ein Flachrohr hindurchgesteckt, sodass durch eine Vielzahl von Rohren, die durch den Stapel aus Rippen hindurchgehen, ein Wärmeübertragerblock gebildet wird. Der dortige Wärmeübertrager besitzt zusätzlich Seitenteile aus Kunststoff und ein als Sammelkasten anzusehendes Bodenteil, welches ebenfalls aus Kunststoff besteht. Ein zur Herstellung des Wärmeübertragers oftmals erforderlicher Lötprozess wird durch die dortige Gestaltung vermieden, was als vorteilhaft angesehen werden kann, denn Lötverfahren benötigen immer noch einen beträchtlichen energetischen Aufwand, der sich mehr und mehr als Kostenfaktor bemerkbar macht. Und Lötverfahren sind auch immer noch mehr oder weniger mit Umweltbelastungen verbunden. Der Kontakt zwischen den Flachrohren und den Wärmeübertragungskörpern ist bei dem bekannten Wärmeübertrager nicht besonders intensiv, was den Wärmeübergang behindern dürfte. Eine hinsichtlich der beschriebenen Merkmale identische Ausbildung des Wärmeübertragers findet sich auch in der DE 32 02 901 C2, sowie in der DE 32 10 114 C2.

Der Wärmetauscher aus der DE 37 28 303 A1 besitzt runde Rohre und Wärmeübertragungskörper (ebene oder gewellte Rippen) aus Kunststoff, die mit den Rohren einstückig hergestellt worden sind. Dieser Wärmetauscher kann wohl auch ohne Lötverfahren hergestellt werden. Seine Wärmetauscheffizienz ist jedoch verbesserungsbedürftig.
Weiterer Stand der Technik ist der Anmelderin aus der WO 00/43722 A1 bekannt geworden. Dort sind runde Rohre aus Kunststoff zum Einsatz gekommen. Um den Wärmeübergang zwischen der um die Rohre herum strömenden Kühlluft und der in den Rohren strömenden Ladeluft anzuheben, wurde eine in wellenförmigen Reihen verlaufende Rohranordnung vorgesehen. Die Kühlluft wird somit mehrmals umgelenkt. Wärmeübertragungskörper zwischen den Rohren sind dort scheinbar nicht vorhanden. Dafür sind die wellenförmigen Rohrreihen wohl möglichst dicht aneinanderliegend angeordnet, womit das Fehlen von Wärmeübertragungskörpern jedoch nicht kompensiert werden kann.
Schließlich wurden im EP 191 956 A1 Wärmeübertrager gezeigt und beschrieben, die entweder Rohre aus Metall oder aus Kunststoff besitzen können. Der zu verwendende Werkstoff für die übrigen Bauelemente des Wärmeübertragers, insbesondere für die Wärmeübertragungskörper, wurde dort nicht erwähnt. Die in den Figuren gezeigte Gestaltung derselben lässt darauf schließen, dass sie aus Kunststoff hergestellt sind. Dieser Wärmeübertrager weist keine Sammelkästen auf, sondern dort befindet sich der Wärmeübertragerblock in einem Gehäuse und wird im Kreuzstrom von den beiden wärmeübertragenden Medien durchströmt. Seine Wärmetauscheffizienz ist ebenfalls verbesserungsbedürftig.

Die Aufgabe der vorliegenden Erfindung besteht darin, den im Oberbegriff beschriebenen Wärmeübertrager hinsichtlich seiner Wärmetauscheffizienz zu verbessern, jedoch dabei an einem Herstellungsprozess festzuhalten, der kein Lötverfahren beinhaltet.
Die erfindungsgemäße Lösung ergibt sich bezüglich des Wärmeübertragers aus dem Patentanspruch 1. Das erfindungsgemäße Herstellungsverfahren ist Gegenstand des Anspruchs 9.
Die Rohre bestehen aus Kunststoff und die Wärmeübertragungskörper sind aus Metall hergestellt. Ein Teil der Wärmeübertragungskörper wurde in die Wand der Flachrohre eingearbeitet.

Die Wand der Rohre ist wenigstens dort, wo der Kontakt mit den Wärmeübertragungskörpern vorhanden ist, in der Wanddicke reduziert worden, wodurch die Einarbeitung in die Wand zum Ausdruck kommt. In der Wand befinden sich Furchen.

Die Einarbeitung kann auch dadurch zum Ausdruck kommen, dass die Wand nicht - oder nicht nur - in der Wanddicke reduziert ist, sondern dass die Wand auch durchbrochen ist.
In den Kunststoffrohren können sich Inneneinsätze befinden, die ebenfalls aus Metall hergestellt werden. Auch die Inneneinsätze können in die Wand der Kunststoffrohre eingearbeitet werden.
Durch die erfindungsgemäße Ausgestaltung kann auf Lötverfahren verzichtet werden. Hinsichtlich des verbesserten wärmeleitenden Kontaktes wird dieser - im Vergleich mit vollständig aus Kunststoff bestehenden Lösungen - durch die metallischen Wärmeübertragungskörper erreicht und durch die reduzierte Wanddicke der Rohre im Verbindungsbereich bzw. durch die Einarbeitung eines Teils der Wärmeübertragungskörper in die Wand der Flachrohre weiter gesteigert. Ferner stellt sich durch die örtliche Plastifizierung der Wand eine gewisse intime Verbindung ein. Im Bedarfsfall können zusätzlich gut wärmeleitende Kleber eingesetzt werden.
Unter dem Begriff "Rohre" im Sinne der vorliegenden Erfindung werden im wesentlichen alle Formen und Bauarten von Leitungen verstanden, in denen ein Medium strömen und Wärme mit einem außerhalb der Leitung strömenden Medium austauschen kann.

Die Rohre können vorzugsweise extrudierte Flachrohre sein.
Die Flachrohre können aber auch durch je zwei Kunststoffplatten gebildet sein, zwischen denen sich zwei Stäbe aus Kunststoff erstrecken, um den Abstand zwischen den zwei Platten zu halten, und um einen Strömungskanal zwischen den zwei Platten zu schaffen.

Die Flachrohre sind bevorzugt Mehrkammerrohre, was jedoch keine Bedingung ist.

Die Wärmeübertragungskörper sind bevorzugt Wellrippen und weiter bevorzugt sind dieselben aus Aluminiumblech oder aus Buntmetall-Blech hergestellt. Unter Wellrippen werden im vorliegenden Zusammenhang alle wellenartig verlaufenden Wärmeübertragungskörper verstanden, unabhängig von der Ausbildung der einzelnen Wellen, der Wellenlänge, Wellenhöhe etc.. Beispielsweise sogenannte Rechtecklamellen gehören für die Zwecke dieser Anmeldung ebenfalls zu den Wellrippen.

Eine weitere Verbesserung des intimen Kontaktes zwischen den Wellrippen und der Wand der Rohre wird durch einzelne Vorsprünge an den Wellrippen erreicht, die in die Wand der Rohre eindringen oder diese sogar durchdringen können.
Alternative Wärmeübertragungskörper wurden im Anspruch 8 beschrieben. Dort handelt es sich um etwa ebene Rippen mit herausgestellten Flügeln. Die Enden der Flügel dringen in die Wand ein, entweder ohne diese zu durchdringen, oder sie durchdringen die Wand sogar, d. h. sie reichen bis in das Innere der Rohre hinein.
Das Herstellungsverfahren sieht vor, dass Flachrohre und Wärmeübertragungskörper im Wechsel zu einem Wärmeübertragungsblock gestapelt werden. Dann werden die Wärmeübertragungskörper erwärmt. Die Wand der Flachrohre wird durch den Wärmeeintrag in die Wärmeübertragungskörper wenigstens an den Berührungsstellen zwischen der Wand der Flachrohre und den Wärmeübertragungskörpern plastifiziert. Es wird ein intimer Kontakt zwischen Flachrohren und Wärmeübertragungskörper ausgebildet. Dabei kann ein gewisser Druck auf den Wärmeübertragerblock ausgeübt werden, um die Herstellung des intimen Kontaktes zu unterstützen bzw. auszubilden.
Mit dem Herstellungsverfahren werden Wärmeübertrager zur Verfügung gestellt, dessen aus Metall bestehende Wärmeübertragungskörper teilweise in die Wand der Kunststoffrohre eingearbeitet worden sind.

Die Wärmeübertragungskörper werden vorzugsweise mittels elektrischem Induktionsstrom erwärmt.

Die Wärmeübertragungskörper sind bevorzugt Wellrippen, wobei der Wärmeeintrag auf die Wellenberge und die Wellentäler konzentriert wird.
Im Zuge der Erwärmung der Wärmeübertragungskörper wird bedarfweise eine Kühlung innerhalb der Flachrohre vorgenommen.

Die Kühlung erfolgt beispielsweise mit komprimierter Luft. Im Zuge der Herstellung wird ein entsprechendes Verhältnis zwischen dem Kühlbedarf von innen und dem Wärmeeintrag in die äußeren Wellrippen aufrecht erhalten bzw. eingestellt, um die Ausbildung des Kontaktes zu optimieren.
Es kann in einem Ausführungsbeispiel vorgesehen werden, die Wellenberge bzw. die Wellentäler linienartig, zumindest aber an einigen Punkten entlang der linienartigen Berührung zwischen Wellrippe und Flachrohr, durch die Wand des Flachrohres hindurchtreten zu lassen. Damit kann die Effizienz der Wärmeübertragung wesentlich verbessert werden, weil das in den Rohren strömende eine Medium in unmittelbarem Kontakt mit den Wellrippen ist, welche wiederum von dem anderen Medium unmittelbar durchströmt werden. Selbstverständlich muss trotzdem eine dichte Verbindung zwischen Wellrippe und Flachrohr gewährleistet werden. Es können, falls erforderlich, entsprechende geeignete Klebstoffe zum Einsatz kommen.

Die Erfindung wird nachfolgend in Ausführungsbeispielen beschrieben. Aus dieser Beschreibung und aus den restlichen Patentansprüchen ergeben sich weitere Merkmale und darauf basierende Vorteile, die sich später als ein wesentlicher Teil der Erfindung herausstellen können.
Die Fig. 1 zeigt den Wärmeübertrager in einer Frontansicht.
Fig. 2 zeigt einen vergrößerten Ausschnitt aus der Fig. 1;
Fig. 3 zeigt eine Ansicht auf die Rohrenden des Wärmeübertragers;
Fig. 4 zeigt einen anderen Schnitt durch den Wärmeübertrager, der durch eines der Rohre verläuft.
Fig. 5 zeigt einen vergrößerten Ausschnitt aus einem der Rohre.
Fig. 6 zeigt prinzipiell das Zusammenfügen eines Wärmeübertragerblockes anhand einer Wellrippe und eines Flachrohres;
Fig. 7 zeigt einen Ausschnitt zwischen Flachrohr und Wellrippe bei einem anderen Ausführungsbeispiel;
Fig. 8 zeigt prinzipiell ein Ausführungsbeispiel mit einer anderen Flachrohrform;
Fig. 9 zeigt prinzipiell einen gekrümmten Wärmeübertragerblock;
Fig.10 und Fig. 11 - Ausführungsbeispiel mit Vorsprüngen an den Wärmeübertragungskörpern;
Fig. 12 und Fig. 13 - Ausführungsbeispiel mit anderen Wärmeübertragungskörpern;
Fig. 14 - Beispiel für die Erwärmung der Wärmeübertragungskörper im Zuge der Herstellung der Wärmeübertrager;
Fig. 15 zeigt ein Ausführungsbeispiel mit anderen Flachrohren;

In den Ausführungsbeispielen werden Wärmeübertrager beschrieben, die beispielsweise im Kraftfahrzeug als Kühlmittelkühler, Ladeluftkühler oder Ölkühler eingesetzt werden können. Der Bezug auf solche Wärmeübertrager soll ihren Einsatzbereich jedoch nicht darauf einschränken.

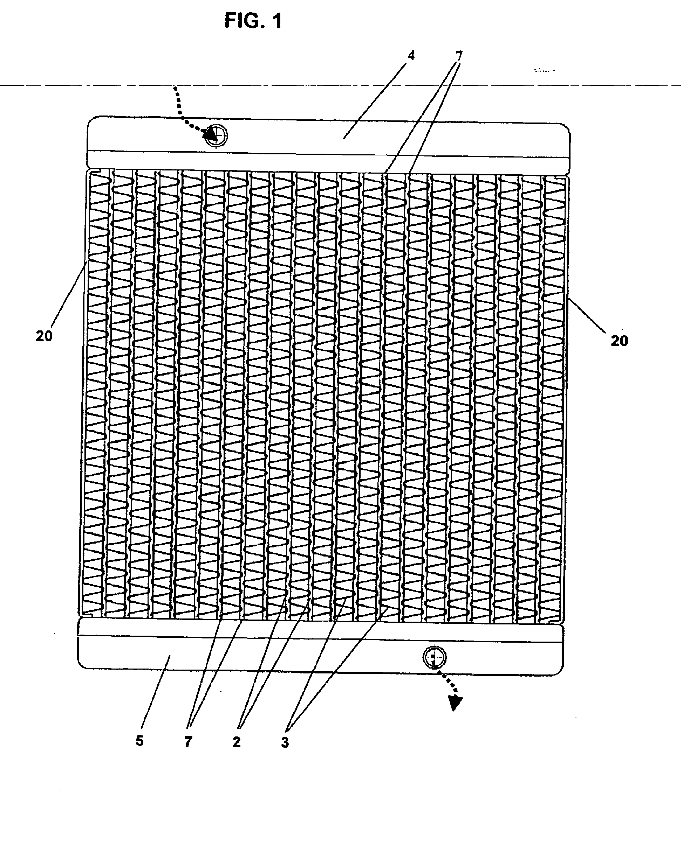

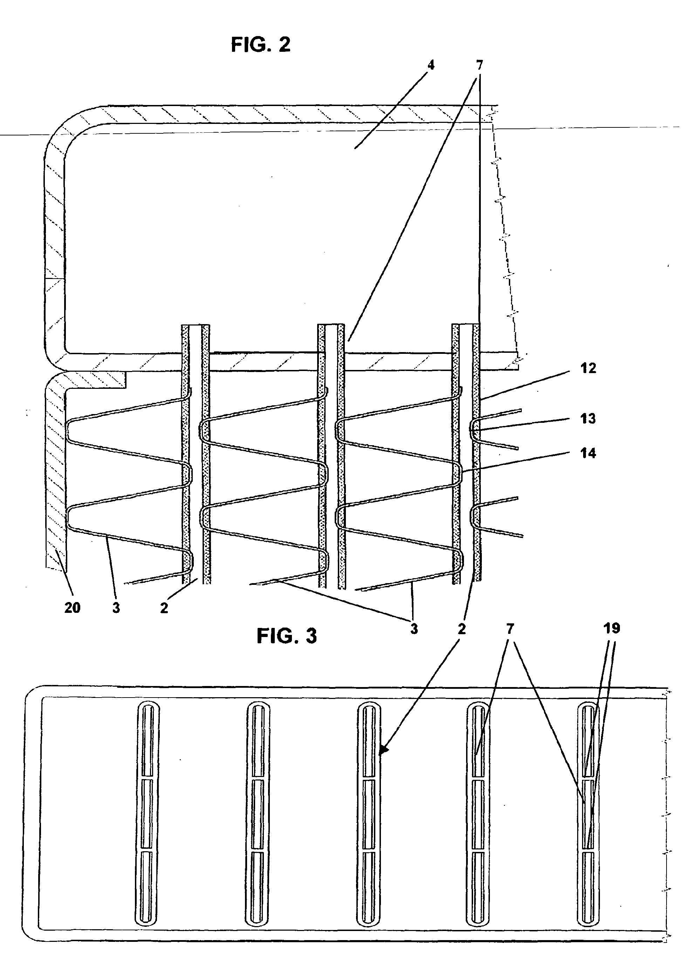

Wie aus der Fig. 1 zu sehen ist, besitzt der Wärmeübertrager einen Wärmeübertragerblock **1,** der aus Flachrohren **2** und Wärmeübertragungskörpern (Wellrippen **3**) zusammengesetzt wurde. Die Flachrohre **2** bestehen aus einem geeigneten Kunststoff, beispielsweise solchem mit der Bezeichnung PA 6.6. Dieser Kunststofftyp hat sich bei Wärmeübertragern im oben genannten Einsatzbereich bereits als geeignet erwiesen. Als Flachrohre des Ausführungsbeispiels wurden extrudierte Flachrohre vorgesehen. Die Wellrippen **3** wurden aus Aluminiumblech hergestellt. Messing oder Kupfer sind andere günstige Alternativen. Es können bereits jetzt vorhandene, verfügbare Wellrippen **3** zum Einsatz kommen, was als ein Vorteil der Erfindung angesehen werden kann. Der Wärmeübertrager dieses Ausführungsbeispiels besitzt zwei an gegenüberliegenden Enden **7** der Flachrohre **2** angeordnete Sammelkästen **4** und **5.** Der Sammelkasten **4** könnte der sogenannten Eintrittssammelkasten sein und der Sammelkasten **5** entsprechend der Austrittssammelkasten. Auch die Sammelkästen **4, 5** bestehen vorzugsweise aus Kunststoff. Die Enden **7** der Flachrohre **2** werden in Öffnungen der Sammelkästen **4, 5** oder in Öffnungen von Rohrböden, die Teil der Sammelkästen **4, 5** sind, eingesetzt und beispielsweise mittels Schweißen oder Kleben dicht und stabil befestigt. (Fig. 2)

Es gibt selbstverständlich nicht gezeigte Ausführungen mit lediglich einem Sammelkasten, der eine Trennwand enthält, die diesen Sammelkasten in einen Eintritts - und einen Austrittssammelkastenteil unterteilt. In solchen Fällen kann sich am gegenüberliegenden Ende **7** der Flachrohre **2** lediglich ein sogenannter Umlenkkasten befinden oder die Enden **7** der Flachrohre **3** können verschlossen sein, wobei dann die Flachrohre **2** vorzugsweise wenigstens eine innere Trennwand aufweisen. Ist ein Umlenkkasten vorgesehen, kann auf die Trennwand in den Rohren dadurch verzichtet werden, dass einige Rohre des Wärmeübertragerblockes dem Eintrittssammelkastenteil und andere Rohre dem Austrittssammelkastenteil zugeordnet werden. All solche Ausbildungen gehören zum Stand der Technik bei Wärmeübertragern, auf den die Erfindung mit Vorteilen anwendbar ist, bzw. der durch die Erfindung weitergebildet wird. Deshalb ist in diesem Sinne auch der Oberbegriff des Patentanspruchs 1 zu verstehen, in dem von "wenigstens einem" Sammelkasten die Rede ist.

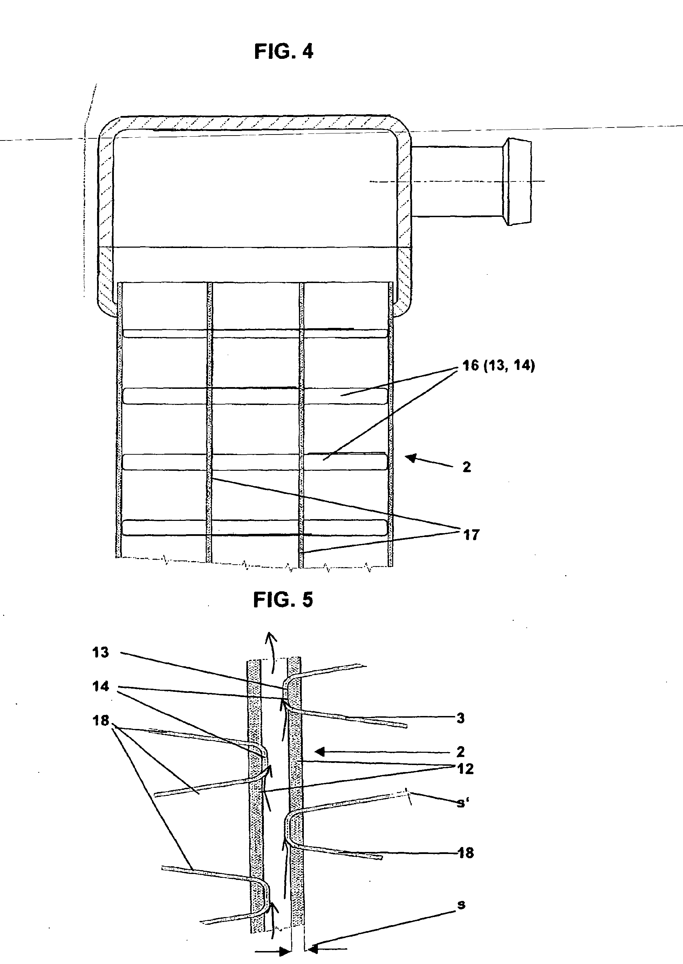

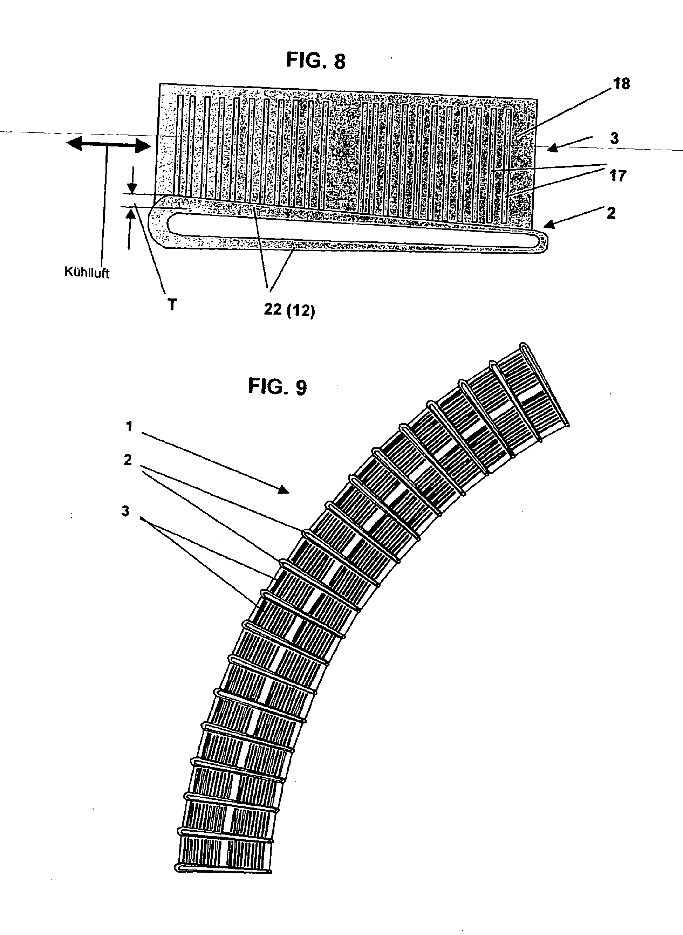

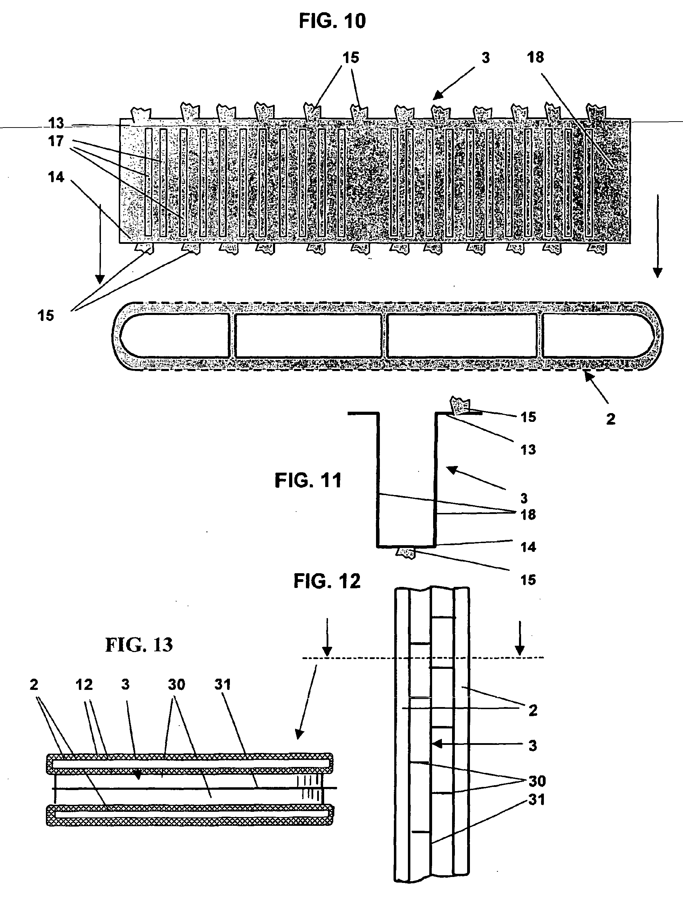

Der Wärmeübertrager des Ausführungsbeispiels besitzt an gegenüberliegenden Seiten jeweils ein Seitenteil **20,** das an den äußeren Wellrippen **3** anliegt und mit den Enden an den Sammelkästen **4** und **5** verbunden ist. Solche Seitenteile **20** sind im vorliegenden Zusammenhang von untergeordnetem Interesse.
Wie bereits die Fig. 1, aber deutlicher die Fig. 2 und 5, zeigen, ist ein Teil der Wellrippen **3** in der Wand **12** der Flachrohre **2** eingebettet, bzw. eingearbeitet worden. In den erwähnten Figuren treten die Wellenberge **13** und die Wellentäler **14** sogar durch die Wände **12** benachbarter Flachrohre **2** hindurch, d. h. die Wände **12** sind schlitzartig durchbrochen. In diesem Ausführungsbeispiel sind besondere Anforderungen an die Dichtigkeit der Verbindungen Wellenberg **13** bzw. Wellental **14** mit der Wand **12** zu stellen, denn innerhalb der Flachrohre **2** befindet sich beispielsweise eine Kühlflüssigkeit, die nicht über die erwähnten Verbindungen nach außerhalb gelangen darf. Durch die Wellrippen **12** strömt dann Kühlluft, senkrecht zur Zeichnungsebene der Fig. 1, frei hindurch. Das Hindurchtreten der Wellrippen **3** durch die Wände **12** kann über nahezu die gesamte in Kühlluftströmungsrichtung liegende Tiefe der Wellrippen **3** bzw. der Flachrohre **2** vorhanden sein, wie es die genannten Figuren zeigen sollen, oder es können Vorsprünge **15** an den Wellenbergen **13** und Wellentälern **14** der Wellrippen **3** ausgebildet sein, die die Wand **12** der Flachrohre **2** durchdringen. Es ist möglich, die in Richtung der Tiefe der Wellrippen **3** liegenden vorderen und hinteren Ränder derselben etwas aufzurichten, um dort für eine bessere Abdichtung zum Inneren der Flachrohre **2** zu sorgen. (nicht deutlich gezeigt) Die Fig. 10 und 11 zeigen ein Ausführungsbeispiel mit Vorsprüngen **15** an den Wellenbergen **13** und den Wellentälern **14.** In der Fig. 5 wurden von unten nach oben weisende Pfeile im inneren des Flachrohres **2** eingezeichnet. Diese zeigen an, dass beispielsweise die dort strömende Kühlflüssigkiet in direkten Kontakt mit den Wellenbergen **13** bzw. den Wellentälern **14** der Wellrippen **3** kommt, wodurch die sehr gute Wärmetauscheffizienz noch weiter verbessert wird. Dieses muss deshalb als besonders bemerkenswert angesehen werden, weil Kunststoffrohre verwendet werden und Kunststoff bekanntlich eine geringere Wärmeleitfähigkeit besitzt als Metall. Die erwähnte Fig. 5 zeigt auch, dass die Strömung der beispielsweise Kühlflüssigkeit durch die nach innen überstehenden Teile der Wellrippen **3** gestört wird, wodurch die Wärmetauscheffizienz zusätzlich positiv beeinflusst wird.
Ein Wärmeübertrager der beschriebenen Art ist in fast jeder Beziehung, also sowohl was seine kostengünstige Herstellung betrifft, als auch was seine hervorragende Wärmetauscheffizienz betrifft, ein deutlicher Fortschritt gegenüber dem Stand der Technik. Der Wärmeübertrager besitzt ferner ein vergleichsweise geringes Gewicht und er ist, was seine Anpassbarkeit an verschiedene Einsatzfälle betrifft, sehr flexibel, d. h. nötige Konstruktionsänderungen sind mit relativ geringem Aufwand in ein konkretes Produkt umsetzbar.
Die Flachrohre **2** sind gemäß dem Ausführungsbeispiel der Fig. 3 als Mehrkammerrohre ausgebildet, die beispielsweise mittels Extrusionsverfahren hergestellt wurden. Im Ausführungsbeispiel sind jeweils zwei Trennstege **19** in jedem Flachrohr **2** vorgesehen, die drei Kammern innerhalb des Flachrohres **2** bilden. Die Wanddicke s der Flachrohre **2** liegt im Bereich von deutlich unterhalb 1 mm. Andere moderne Herstellungsverfahren für Kunststoffrohre, die möglicherweise noch geringere Wanddicken möglich machen, stehen dem Fachmann zur Verfügung. Die Wanddicke s' der Wellrippen **3** bewegt sich im Bereich von zehntel oder sogar hundertstel Millimeter.
Im Hinblick auf die bereits erwähnte hohe Flexibilität des Wärmeübertragers wird auf die Fig. 8 und 9 aufmerksam gemacht. Daraus ist zu sehen, dass auch Flachrohre **2** zum Einsatz kommen können, die keine parallelen sondern konisch laufende Breitseiten **22** bzw. anwachsende Wanddicken besitzen. Der Einsatz solcher Flachrohre **2** ermöglicht die Bereitstellung von Wärmeübertragern, die keinen ebenen sondern einen mit einer Kontur versehenen bzw. gekrümmten Wärmeübertragerblock 1 aufweisen.
Ein weiterer Gedanke geht aus der Fig. 8 hervor. Man kann die Eindringtiefe **T** der Wellrippe **3** in die Wand **12** der Flachrohre **2** so gestalten, dass diese mit steigender Wanddicke s der Flachrohre **2** entsprechend tiefer wird. Dadurch kann dann auch ein ebener Wärmeübertragerblock **1** erzeugt werden. Außerdem können beabsichtigte thermodynamische Effekte dadurch erzielt werden, dass die Kanäle zwischen den Flachrohren **2,** durch die die Kühlluft hindurchströmt, sich in Kühlluftströmungsrichtung verengen oder erweitern. Die Verengung bzw. Erweiterung des Kanals kann in der Fig. 8 daran erkannt, werden, dass auf der linken Seite der Abbildung die "freie" Höhe der Wellrippe **3** geringer ist als auf der rechten Seite. Also ist die Eindringtiefe **T** links größer als rechts. Man muss sich auch am im Bild oberen Ende eine zweites identisch angeordnetes Flachrohr **2** vorstellen, um zu erkennen, dass der Kanal links enger ist als rechts. Damit wird die Strömungsgeschwindigkeit der Kühlluft verändert und, wie gewünscht, auch Einfluss auf den Druckverlust in der Kühlluft genommen.

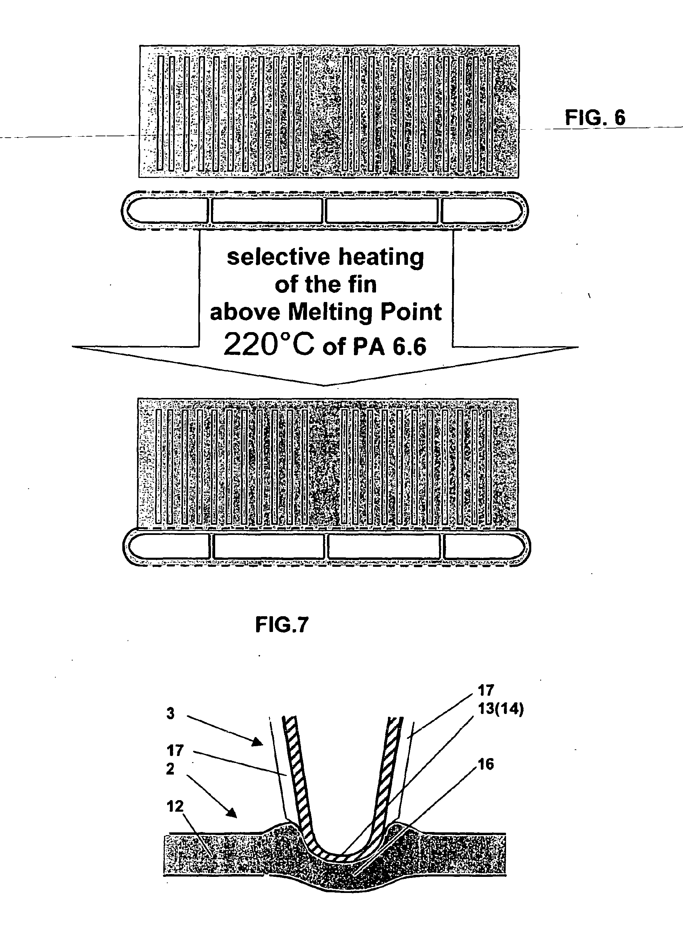

In der Fig. 8 und in der Fig. 7 wurden sogenannte Schnitte **17** in schematisierter Art eingezeichnet, die sich in den Flanken **18** der Wellrippen **3** aber auch in anderen Wärmeübertragungskörpern **3** befinden, um für verstärkte Turbulenz in der Kühlluft und damit für einen effizienteren Wärmeaustausch zu sorgen. Gemäß dem Ausführungsbeispiel nach Fig. 7 sind keine Durchbrüche durch die Wand **12** der Flachrohre **2** vorhanden. Die Wanddicke wurde zur Verbesserung des Kontaktes allerdings deutlich reduziert. Es wurden Furchen **16** ausgebildet, wobei in jeder Furche **16** ein Wellenberg **13** bzw. Wellental **14** angeordnet ist.
In den Fig. 12 und 13 wurden andere Wärmeübertragungskörper **3** eingesetzt, die eine ebene Fläche **31** aufweisen, aus der in dichten Abständen und in entgegengesetzter Richtung von der Fläche **31** wegweisende Flügel **30** aus derselben herausgestellt wurden. Die Fig. 12 zeigt einen Ausschnitt aus dem Wärmeübertragerblock **1** mit lediglich zwei Flachrohren **2.** Es ist dort die Ansicht auf die Schmalseiten der Flachrohre **2** gezeigt. Die Fig. 13 zeigt den in der Fig. 12 eingezeichneten Schnitt, bzw. eine Ansicht von oben auf die Fig. 12, aus dem folglich ein Blick in Längsrichtung der Flachrohre **2** zu sehen ist. Beide Darstellungen sind lediglich prinzipiell, aber sollten zum Verständnis ausreichen.

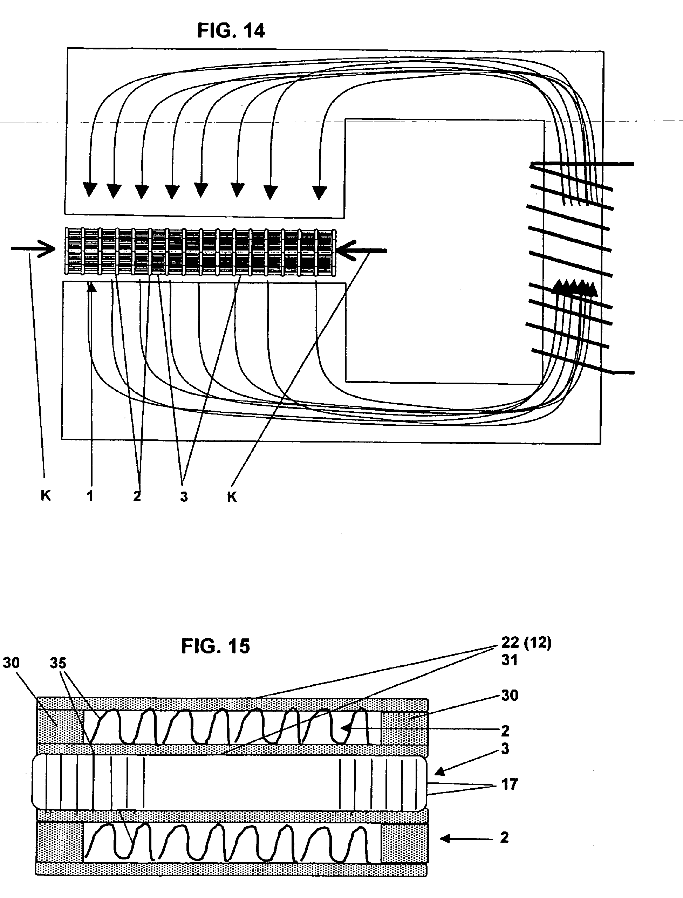

Die Fig. 15 zeigt ein Ausführungsbeispiel welches bezüglich der Ansicht ähnlich der Fig. 13 ist. Es soll hiermit dargestellt werden, dass jedes Flachrohr **2** auch aus zwei Platten **31** und zwei Stäben **30** gebildet werden kann, wobei sich die Stäbe **31** entlang der Längskanten der Platten **31** erstrecken. Es wurden also lediglich zwei Flachrohre **2** im Schnitt gezeigt, zwischen denen eine Wellrippe **3** angeordnet ist. Die Wellrippe **3** ist in die Wand **12** eingedrungen. Die gezeigte Flanke der Wellrippe **3** ist mit Schnitten **17** versehen worden. Der Wärmeübertrager wurde hier auch insofern weitergebildet, als auch innen in den Flachrohren **2** ein Einsatz **35** vorhanden ist. Auch dieser Einsatz **35** ist aus Metall, in diesem Fall ebenfalls aus Aluminiumblech, gefertigt worden. Der Einsatz **35** kann ebenfalls - in diesem Fall von innen - in die Wand **12** der Flachrohre **2** eingearbeitet sein. Solche Ausbildungen sind besonders für luftgekühlte Ladeluftkühler empfehlenswert. Die Tatsache, dass Inneneinsätze **35** hier in Verbindung mit Flachrohren **2** aus Platten **31** und Stäben **30** dargestellt sind, soll ihre Einsetzbarkeit nicht darauf beschränken. Ansonsten ist die Darstellung ebenfalls rein schematisch.
Die Fig. 14 dient, in Verbindung mit den bereits erklärten Abbildungen, der näheren Darstellung des Herstellungsverfahrens, bei dem Kunststoff-Flachrohre **2** und Wärmeübertragungskörper **3** zum Wärmeübertragerblock **1** zusammengesetzt werden. Der Wärmeübertragerblock **1** wurde etwa im Zentrum der Fig. 14 angedeutet. Die metallischen Wärmeübertragungskörper **3** werden sodann erwärmt, wozu im Ausführungsbeispiel ein Induktionsstrom erzeugt und angelegt wurde. Die Wände **12** der Kunststoff - Flachrohre **2** werden durch den Wärmeeintrag wenigstens an den Berührungsstellen zwischen der Wand **12** und den Wärmeübertragungskörpern **3** plastifiziert. Sie gehen also vorübergehend in einen leicht teigigen Zustand über. Dieser Prozess der Plastifizierung kann gesteuert werden, indem beispielsweise gleichzeitig mit der Erwärmung der Wärmeübertragungskörper **3** Kühlluft durch die Flachrohre **2** geschickt wird. Außerdem wird gezielt eine dosierte Kraft in Richtung der beiden links und rechts auf den Wärmeübertragerblock **1** gerichteten Pfeile **K** auf denselben **1** aufgetragen. (Das Bündel mit anderen Pfeilen in Fig. 14 soll anzeigen, dass ein in einer Induktionsspule erzeugter Strom fließt.) Es stellt sich ein intimer Kontakt zwischen den Rohren **2** und den Wärmeübertragungskörpern **3** ein. Insbesondere sehen die Verbindungen zwischen den Flachrohren 2 und den Wärmeübertragungskörpern **3** nach dem Abschluss des Verfahrens, der mit einer gewissen Abkühlzeit verbunden sein kann, etwa so aus, wie es in der Figur 7 gezeigt und vorstehend beschrieben ist. Dort sind keine Durchbrüche der Wände **12** vorhanden. Es gibt demzufolge dort keine Probleme bezüglich der Abdichtung. Eine andere vorne beschriebene Verbindung ist diejenige aus der Fig. 5, in der die Wärmeübertragskörper **3** durch die Wand **12** hindurchtreten und in das Innere der Flachrohre **2** reichen. Eine noch andere Verbindung ist diejenige aus den Fig. 10 und 11, wo Vorsprünge **15** vorgesehen sind, die sich tief in die Wände **12** eingraben und für eine intensive Verbindung sorgen.
Das Herstellungsverfahren kann auch so ablaufen, dass zunächst einzelne Unterblöcke des späteren Wärmeübertragerblockes **1** gebildet werden, beispielsweise bestehend aus einem Wärmeübertragerkörper **3** und einem oder auch zwei Rohren **2.** (nicht gezeigt) Bei der Herstellung der Unterblöcke wird der oder die Wärmeübertragerkörper **3** ebenfalls erwärmt und mit dem Rohr oder den Rohren zusammengefügt. Passende Unterblöcke können dann, wie beschrieben, soll heißen, ebenfalls durch Erwärmung, der an den Nahtstellen der Unterblöcke vorhandenen Wärmeübertragerkörper **3,** zum gesamten Wärmeübertragerblock **1** zusammengefügt werden.
Ferner könnte der Wärmeübertragerblock **1** auch dadurch hergestellt werden, dass Rohre **2** und Wärmeübertragungskörper **3** im Wechsel einzeln zusammengesetzt werden. Dabei wird jeder einzelne hinzugefügte Wärmeübertragerkörper **3** erwärmt und jeweils mit einem oder mit zwei Rohren **2** verbunden. Demzufolge sind die Verfahrensansprüche so auszulegen, dass auch diese Möglichkeiten umfasst sind.

## Patentansprüche

1. Wärmeübertrager, bestehend aus Rohren (2) und dazwischen angeordneten Wärmeübertragungskörpern (3), die mit den Rohren (2) in Kontakt sind, sowie mit wenigstens einem Sammelkasten (4, 5), zur Einleitung des einen wärmeübertragenden Mediums in die Rohre (2) bzw. zur Aufnahme des einen wärmeübertragenden Mediums aus den Rohren (2), wobei das andere wärmeübertragende Medium durch die Wärmeübertragungskörper (3) strömt, um mit dem einen wärmeübertragenden Medium in wärmeübertragender Beziehung zu stehen, und wobei die Rohre (2) aus Kunststoff bestehen und die Wärmeübertragungskörper (3) aus Metall hergestellt sind,
**dadurch gekennzeichnet, dass** ein Teil der Wärmeübertragungskörper (3) in der Wand (12) der Rohre (2) eingearbeitet ist.

2. Wärmeübertrager nach Anspruch 1, **dadurch gekennzeichnet, dass** die Rohre (2) vorzugsweise extrudierte Flachrohre (2) sind.

3. Wärmeübertrager nach Anspruch 2, **dadurch gekennzeichnet, dass** die Flachrohre (2) bevorzugt Mehrkammerrohre sind.

4. Wärmeübertrager nach Anspruch 1, **dadurch gekennzeichnet, dass** die Wärmeübertragungskörper (3) bevorzugt Wellrippen (3) sind und weiter bevorzugt aus Aluminiumblech oder aus Buntmetall-Blech hergestellt sind.

5. Wärmeübertrager nach einem der Ansprüche 1 - 4, **dadurch gekennzeichnet, dass** die Wellrippen (3) mit ihren Wellenbergen (13) und ihren Wellentälern (14) in die Wand (12) der Flachrohre (2) eingebettet sind, derart, dass die Wellenberge (13) bzw. die Wellentäler (14) in Furchen (16) der Wand (12) liegen.

6. Wärmeübertrager nach den Ansprüchen 4 und 5, **dadurch gekennzeichnet, dass** die Wellrippen (3) an ihren Wellenbergen (13) und Wellentälern (14) Vorsprünge (15) aufweisen, die in die Wand (12) der Flachrohre (2) eindringen oder diese durchdringen.

7. Wärmeübertrager nach Anspruch 1, **dadurch gekennzeichnet, dass** die Wärmeübertragungskörper (3) flache Rippen (31) sind, die eine Vielzahl von herausgestellten Flügeln (30) besitzen, wobei die Enden der Flügel (30) in die Wände (12) der Flachrohre (2) eingearbeitet sind.

8. Wärmeübertrager nach einem der vorstehenden Ansprüche, **dadurch gekennzeichnet, dass** in den Kunststoffrohren (2) ein Inneneinsatz (35) angeordnet ist, der vorzugsweise ebenfalls aus Metall besteht.

9. Verfahren zur Herstellung eines Wärmeübertragers, der wenigstens die Merkmale des Anspruchs 1 aufweist, **dadurch gekennzeichnet, dass** Kunststoffrohre (2) und metallische Wärmeübertragungskörper (3) zu einem Wärmeübertragerblock zusammengesetzt werden, dass der metallische Wärmeübertragungskörper (3) erwärmt wird, dass die Wand (12) des Kunststoffrohres (2) durch den Wärmeeintrag wenigstens an den Berührungsstellen zwischen der Wand (12) des Rohres (2) und dem Wärmeübertragungskörper (3) plastifiziert wird, und dass ein intimer Kontakt zwischen Rohr (2) und Wärmeübertragungskörper (3) ausgebildet wird.

10. Verfahren nach Anspruch 9, **dadurch gekennzeichnet, dass** die Wärmeübertragungskörper (3) vorzugsweise mittels elektrischem Induktionsstrom erwärmt werden.

11. Verfahren nach Anspruch 9 oder 10, bei dem die Wärmeübertragungskörper Wellrippen (3) sind, **dadurch gekennzeichnet, dass** der Wärmeeintrag auf die Wellenberge (13) und die Wellentäler (14) konzentriert wird.

12. Verfahren nach einem der vorstehenden Ansprüche 9 - 11, **dadurch gekennzeichnet, dass** im Zuge der Erwärmung der metallischen Wärmeübertragungskörper (3) bedarfweise eine Kühlung innerhalb der Kunststoffrohre (2) vorgenommen wird.

13. Verfahren nach Anspruch 12, **dadurch gekennzeichnet, dass** die Kühlung beispielsweise mit komprimierter Luft erfolgt.

## Claims

1. Heat exchanger, comprising tubes (2) and intervening heat exchange elements (3) which are in contact with the tubes (2), and having at least one collecting box (4, 5), for passing the one heat-exchanging medium into the tubes (2) and for receiving the one heat-exchanging medium from the tubes (2), wherein the other heat-exchanging medium flows through the heat exchange elements (3) so as to be in heat-exchange relationship with the one heat-exchanging medium, and wherein the tubes (2) consist of plastic and the heat exchange elements (3) are made of metal, **characterized in that** a part of the heat exchange elements (3) is incorporated in the wall (12) of the tubes (2).

2. Heat exchanger according to Claim 1, **characterized in that** the tubes (2) are preferably extruded flat tubes (2).

3. Heat exchanger according to Claim 2, **characterized in that** the flat tubes (2) are preferably multi-chamber tubes.

4. Heat exchanger according to Claim 1, **characterized in that** the heat exchange elements (3) are preferably corrugated ribs (3) and, further preferably, are made of aluminium plate or of non-ferrous metal plate.

5. Heat exchanger according to one of Claims 1-4, **characterized in that** the corrugated ribs (3) are embedded with their corrugation peaks (13) and their corrugation valleys (14) in the wall (12) of the flat tubes (2) such that the corrugation peaks (13) and the corrugation valleys (14) lie in channels (16) in the wall (12).

6. Heat exchanger according to Claims 4 and 5, **characterized in that** the corrugated ribs (3) have on their corrugation peaks (13) and corrugation valleys (14) projections (15), which intrude into the wall (12) of the flat tubes (2) or penetrate the latter.

7. Heat exchanger according to Claim 1, **characterized in that** the heat exchange elements (3) are flat ribs (31), which possess a multiplicity of prominent fins (30), the ends of the fins (30) being incorporated in the walls (12) of the flat tubes (2).

8. Heat exchanger according to one of the preceding claims, **characterized in that** in the plastics tubes (2) there is disposed an inner insert (35), which preferably likewise consists of metal.

9. Method for producing a heat exchanger having at least the features of Claim 1, **characterized in that** plastics tubes (2) and metal heat exchange elements (3) are combined into a heat exchange block, **in that** the metal heat exchange element (3) is warmed, **in that** the wall (12) of the plastics tube (2) is plasticized by the heat input at least at the contact points between the wall (12) of the tube (2) and the heat exchange element (3), and **in that** an intimate contact between tube (2) and heat exchange element (3) is formed.

10. Method according to Claim 9, **characterized in that** the heat exchange elements (3) are warmed preferably by means of electric induction current.

11. Method according to Claim 9 or 10, in which the heat exchange elements are corrugated ribs (3), **characterized in that** the heat input is concentrated upon the corrugation peaks (13) and the corrugation valleys (14).

12. Method according to one of the preceding claims 9-11, **characterized in that**, in the course of the warming of the metal heat exchange elements (3), a cooling is performed, if necessary, within the plastics tubes (2).

13. Method according to Claim 12, **characterized in that** the cooling is realized, for example, with compressed air.

## Revendications

1. Echangeur de chaleur, constitué de tubes (2) et de corps de transfert thermique (3) disposés entre eux qui sont en contact avec les tubes (2), et présentant au moins une caisse collectrice (4, 5) pour introduire un premier fluide de transfert thermique dans les tubes (2) ou pour recevoir un premier fluide de transfert thermique provenant des tubes (2), l'autre fluide de transfert thermique s'écoulant à travers les corps de transfert thermique (3), afin d'être en relation de transfert thermique avec le premier fluide de transfert thermique, les tubes (2) se composant de plastique et les corps de transfert thermique (3) étant fabriqués en métal,
**caractérisé en ce qu'**une partie des corps de transfert thermique (3) est incorporée dans la paroi (12) des tubes (2).

2. Echangeur de chaleur selon la revendication 1, **caractérisé en ce que** les tubes (2) sont de préférence des tubes plats extrudés (2).

3. Echangeur de chaleur selon la revendication 2, **caractérisé en ce que** les tubes plats (2) sont de préférence des tubes à plusieurs chambres.

4. Echangeur de chaleur selon la revendication 1, **caractérisé en ce que** les corps de transfert thermique (3) sont de préférence des ailettes ondulées (3) et de préférence sont fabriqués en tôle d'aluminium ou en tôle de métal lourd non ferreux.

5. Echangeur de chaleur selon l'une quelconque des revendications 1 à 4, **caractérisé en ce que** les ailettes ondulées (3) sont encastrées avec leurs sommets d'ondulations (13) et leurs creux d'ondulations (14) dans la paroi (12) des tubes plats (2) de telle sorte que les sommets d'ondulations (13) ou les creux d'ondulations (14) se situent dans des sillons (16) de la paroi (12).

6. Echangeur de chaleur selon l'une quelconque des revendications 4 et 5, **caractérisé en ce que** les ailettes ondulées (3) présentent au niveau de leurs sommets d'ondulations (13) et de leurs creux d'ondulations (14) des saillies (15) qui pénètrent dans la paroi (12) des tubes plats (2) ou qui la traversent.

7. Echangeur de chaleur selon la revendication 1, **caractérisé en ce que** les corps de transfert thermique (3) sont des ailettes plates (31) qui possèdent une pluralité d'ailes saillantes (30), les extrémités des ailes (30) étant incorporées dans les parois (12) des tubes plats (2).

8. Echangeur de chaleur selon l'une quelconque des revendications précédentes, **caractérisé en ce qu'**un insert intérieur (35) est disposé dans les tubes en plastique (2), lequel se compose également de métal.

9. Procédé de fabrication d'un échangeur de chaleur, qui présente au moins les caractéristiques de la revendication 1, **caractérisé en ce que** des tubes en plastique (2) et des corps de transfert thermique en métal (3) sont rassemblés pour former un bloc d'échangeur de chaleur, **en ce que** le corps de transfert thermique métallique (3) est chauffé, **en ce que** la paroi (12) du tube en plastique (2) est plastifiée par l'apport thermique au moins au niveau des points de contact entre la paroi (12) du tube (2) et le corps de transfert thermique (3), et **en ce qu'**un contact intime entre le tube (2) et le corps de transfert thermique (3) est créé.

10. Procédé selon la revendication 9, **caractérisé en ce que** les corps de transfert thermique (3) sont de préférence chauffés au moyen d'un courant inductif électrique.

11. Procédé selon la revendication 9 ou 10, dans lequel les corps de transfert thermique sont des ailettes ondulées (3), **caractérisé en ce que** l'apport thermique est concentré sur les sommets d'ondulations (13) et les creux d'ondulations (14).

12. Procédé selon l'une quelconque des revendications 9 à 11, **caractérisé en ce qu'**au cours du chauffage des corps de transfert thermique métalliques (3) on effectue au besoin un refroidissement à l'intérieur des tubes en plastique (2).

13. Procédé selon la revendication 12, **caractérisé en ce que** le refroidissement s'effectue de préférence avec de l'air comprimé.
